# EUROPÄISCHE PATENTSCHRIFT

(11) **EP 1 004 240 B1**
(45) Veröffentlichungstag und Bekanntmachung des Hinweises auf die Patenterteilung: **24.09.2003**
(21) Anmeldenummer: 99121316.6
(22) Anmeldetag: 26.10.1999
(51) Int. Cl.: A01M 7/00, A01B 79/00

(54) **Vorrichtung zur Erkennung von Pflanzen und/oder Mustern in landwirtschaftlichen Anwendung**
Device for recognizing plants and/or forms applied to agriculture
Dispositif de reconnaissance de plantes et/ou de formes apliquées en agriculture

(30) Priorität: 27.11.1998 DE 19854694; 18.12.1998 DE 19858552
(43) Veröffentlichungstag der Anmeldung: 31.05.2000
(73) Patentinhaber: Amazonen-Werke H. Dreyer GmbH & Co. KG, 49205 Hasbergen (DE)
(72) Erfinder: Dzinaj, Timur, Dipl.-Ing., 81247 München (DE); Hörstkamp, Stephan Kleine, Dipl.-Ing., 49477 Ibbenbüren (DE); Linz, Andreas, Dipl.-Ing., 49076 Osnabrück (DE); Klamt, Steffen, Dipl.-Ing., 39126 Magdeburg (DE); Gelze, Frank, Dipl.-Ing., 49844 Bawinkel (DE); Ruckelshausen, Arno, Prof.Dr., 49080 Osnabrück (DE)

(56) Entgegenhaltungen:
- EP-A- 0 576 121
- DE-A- 19 530 356
- DE-C- 19 642 439
- US-A- 5 555 464
- US-A- 5 621 460
- US-A- 5 992 758

## Beschreibung

Die Erfindung betrifft eine Vorrichtung gemäß des Oberbegriffes des Patentanspruches 1.

Derartige Vorrichtungen sind beispielsweise durch die DE-PS 196 42 439 bekannt.

Weitere Vorrichtungen sind in der Literatur vielfältig beschrieben, jedoch keines dieser Systeme konnte sich bisher im breiten Umfang im praktischen Einsatz durchsetzen.

Die Online-Anwendung von kommentionellen Kamerasystemen bei der Pflanzenerkennung in landwirtschaftlichen Anwendung war bisher technisch nicht möglich, da sowohl die Probleme der Komplexität der Auswertung als auch die hohe Datenrate mit entsprechenden Zeiten zur Bildverarbeitung nicht gelöst werden konnten.

Der Erfindung liegt die Aufgabe zugrunde, unter Nutzung heutiger moderner Technologie eine Online-Erkennung mit preiswerten Mitteln zu schaffen.

Diese Aufgabe wird erfindungsgemäß durch die kennzeichnenden Merkmale des Patentanspruches 1 gelöst. Infolge dieser Maßnahmen wird ein modernes neuartiges und darüber hinaus äußerst preiswertes Kamerasystem geschaffen, welches in Verbindung mit geometrischen und spektralen Merkmalen der Pflanzen zur Online-Erkennung ausgenutzt wird.

Um eine schnelle Auswertung der aufgenommenen Signale im Online-Verfahren zu ermöglichen, ist vorgesehen, daß die Auflösung des aufzunehmenden Bildes per Software festlegbar und nicht durch die Kamera fixiert ist. Als besonders vorteilhaft hat sich die Auflösung von 32x32 Pixel herausgestellt. Desweiteren zeichnen sich die eingesetzten Kameras durch ihre geringen Kosten im Vergleich zu CCD-Kameras aus. Hierbei können Kameras mit einer größeren Anzahl Pixel Verwendung finden, beispielsweise 512x512 Pixel oder mehr, wobei lediglich eine begrenzte Anzahl Pixel zur Auswertung verwendet wird. So ist für die Pflanzenerkennung derzeit eine Auflösung von beispielsweise 32x32 Pixel sinnvoll. Dieses bedeutet, daß softwaremäßig nur eine begrenzte Anzahl Pixel zur Auswertung herangezogen wird, um einerseits preiswerte Kameras einsetzen zu können und andererseits eine schnelle Auswertung erreicht wird.

Eine Verbesserung der aufgenommenen Signale läßt sich dadurch erreichen, daß den Sensorelementen eine Beleuchtungsquelle im nahen Infrarotbereich zugeordnet ist. Hierdurch wird bei den Pflanzen der hohe Reflektionsgrad ausgenutzt und gleichzeitig werden die Reflektionsanteile des Bodens reduziert. Alternativ dazu ist auch der Einsatz von optischen Filtern und eine Beleuchtungsquelle im nahen Infrarotbereich möglich.

Gegebenenfalls kann seitlich eine Beleuchtungsquelle angebracht werden, so daß die Reflektionsanteile des Bodens weiter unterdrückt werden.

Darüber hinaus sieht die Erfindung in einer Ausführung vor, daß eine schnelle Weiterverarbeitung der Signale durch eine Microcontrollersystem oder einen PC erfolgt.

Desweiteren ist vorgesehen, daß das Bild kontinuierlich in Zeitintervalle ausgelesen wird, die deutlich unterhalb der Fernsehnorm konventioneller Kameras liegen.

Desweiteren ist vorgesehen, daß die Erkennung einer Pflanze durch die flächenmäßige Auswertung der Kamerasignale gestartet wird. Erst ab einer gewissen Zahl "grüner Pixel" wird die Weiterverarbeitung vorgenommen. Hierbei läßt sich der Schwellwert der Anzahl grüner Pixel auch dynamisch einstellen. Bei der Weiterverarbeitung wird nach einer Hauptkomponentenanalyse die Auswertung vorgenommen. Wenn eine Schwarzweiß-Kamera eingesetzt wird, wird quasi in der Weiterverarbeitung zwischen schwarzen und weißen Pixeln unterschieden. Es sind sowohl Farb- wie Schwarzweiß-Kameras einsetzbar.

Desweiteren ist in einer Weiterbildung der Erfindung vorgesehen, daß zur Weiterverarbeitung eine spezielle Software zur Analyse der Signale verwendet wird, die schnelle Algorithmen (z.B. Hauptkomponentenanalyse) enthält. Hierdurch werden Gesamtverarbeitungszeiten (Bildaufnahme und Auswertung) erreicht, die weit unterhalb der Bildaufnahmezeiten konventioneller Kameras liegen können. Bei Verwendung eines typischen PC's liegt diese Zeit beispielsweise bei 0,5 Millisekunden, bei typischen Microcontrollern bei ca. 20 Millisekunden. Diese Angaben beziehen sich auf einen Pentium 200 Mhz-Rechner. Beim Einsatz schnellerer Rechner oder Prozeßoren ergeben sich kürzere Verarbeitungszeiten.

Bei praktischen Versuchen hat sich herausgestellt, daß die Verwendung von zwei oder mehr Kameras (oben oder seitlich angeordnet) zur Korrelation geometrischer Merkmale vorteilhaft ist. Die Pflanzenmerkmale von Nutzpflanzen und Beikräutern sind in vielen Fällen durch ihre Geometrie (Sicht von oben und seitlich) unterscheidbar. Die beiden Kamerasignale werden hierbei ausgewertet und durch eine schnelle Analyse der Daten werden die Pflanzen differenziert und hierdurch vom System erkannt.

Der Einsatz eines Microcontrollers erlaubt die Integration weiterer Sensoren im Rahmen einer sogenannten Multisensorkonzeption. Dieses ist für den speziellen Fall von Bedeutung, wenn die Differenzierung von Nutzpflanzen und Beikräutern durch zwei oder mehrere Kameras nicht immer möglich ist.

Weitere Einzelheiten der Erfindung sind den übrigen Unteransprüchen, der Beispielsbeschreibung und den Zeichnungen zu entnehmen. Hierbei zeigen
- Fig.1: die schematische Anordnung der Kamera und den prinzipiellen Aufbau der Vorrichtung und
- Fig.2: einen weiteren Aufbau der Vorrichtung.

Die Vorrichtung zur Erkennung von Pflanzen und/oder Mustern in landwirtschaftlichen Anwendungen weist eine digitale CMOS-XY Kamera 1 auf. Desweiteren ist eine seitliche Beleuchtungsquelle 2 zur Beleuchtung der zu erkennenden Pflanzen 3 angeordnet. Die Kamera 1 ist über eine Datenübertragungsleitung 4 mit einem Microcontrollersystem 5 oder einem PC verbunden.

Die Funktionsweise dieses Systems ist folgende: In dem Microcontrollersystem 5 bzw. dem PC ist softwaremäßig die Auflösung des aufzunehmenden Bildes festgelegt und daher nicht durch die Kamera 1 fixiert. Hierbei ist im Ausführungsbeispiel die Auflösung bei 32x32 Pixel festgelegt. Die Beleuchtungsquelle 2 strahlt im nahen Infrarotbereich die Pflanze 3 an. Hierdurch wird der Hohe Reflektionsgrad der Pflanze 3 ausgenutzt und gleichzeitig der Reflektionsanteil des Bodens 6 reduziert bzw. unterdrückt, so daß die Kamera 1 klare Signale empfangen und somit auslesen kann. Die Weiterverarbeitung der Signale, die von der Kamera 1 aufgenommen werden, erfolgt durch das Microcontrollersystem 5 bzw den PC. Das Bild wird kontinuierlich in Zeitintervallen ausgelesen, die deutlich unterhalb der Fernsehnorm konventioneller Kameras liegen. Die Ansteuerung erfolgt somit über die programmierbare Hardware des Microcontrollersystems 5 bzw. des PC's. Hierbei wird die Erkennung einer Pflanze 3 durch die flächenmäßige Auswertung der Kamerasignale gestartet. Erst ab einer gewissen Zahl (Schwellwert, auch dynamisch einstellbar) "grüner Pixel" wird die Weiterverarbeitung (Hauptkomponentenanalyse) vorgenommen.

Zur Weiterverarbeitung wird eine spezielle Software zur Analyse verwendet, die schnelle Algorithmen (Hauptkomponentenanalyse) enthält. Hierdurch werden Gesamtverarbeitungszeiten (Bildaufnahme und Auswertung) erreicht, die unterhalb der Bildaufnahmezeit konventioneller Kameras liegen. Bei Verwendung eines typischen PC's liegt diese Zeit beispielsweise bei 05 Millisekunden, bei typischen Microcontrollern bei ca. 20 Millisekunden.

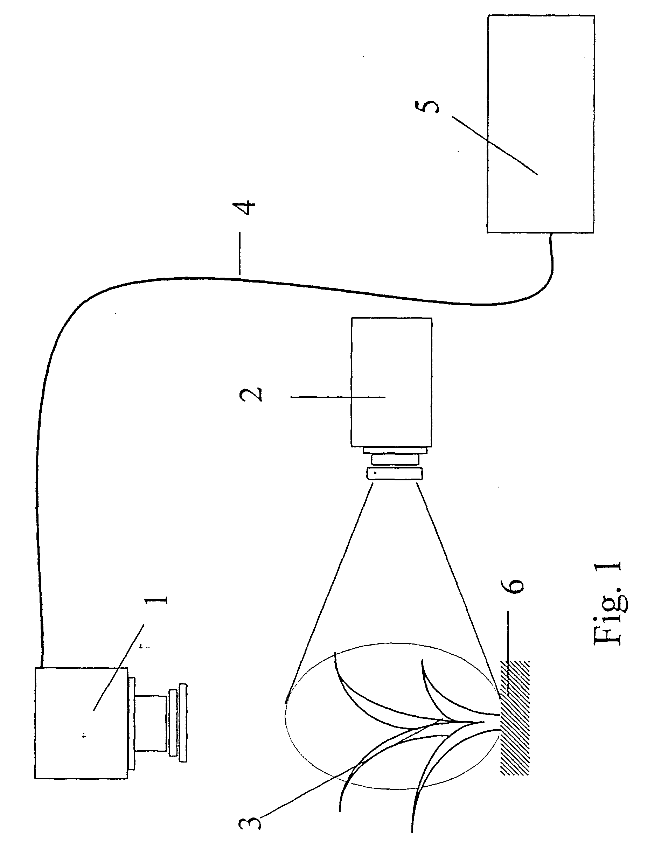

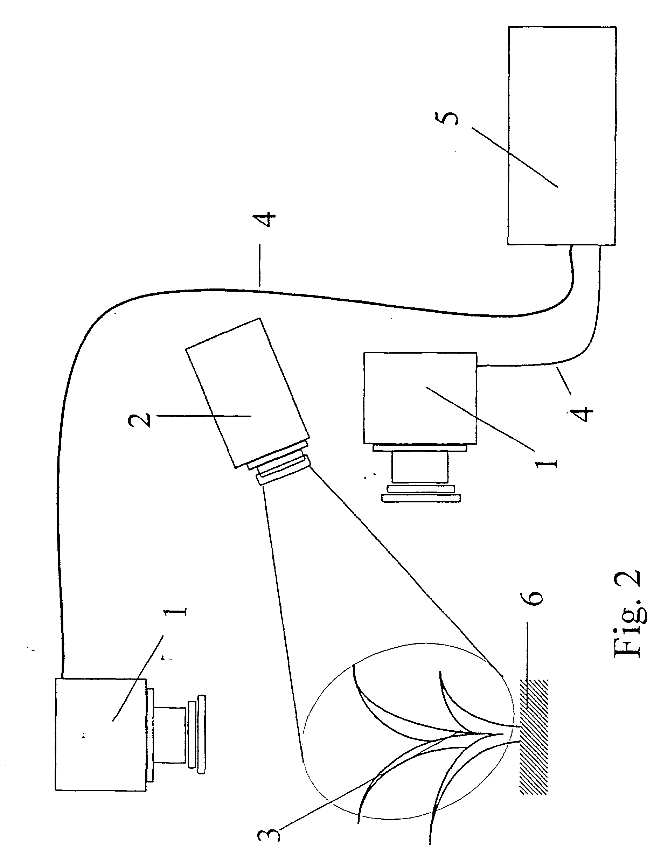

Das Ausführungsbeispiel gemäß Fig.2 unterscheidet sich von dem Ausführungsbeispiel gemäß Fig.1 dadurch, daß zwei Kameras 1 eingesetzt werden. Eine Kamera 1 ist oberhalb des zu erfassenden Objektes 3 und eine Kamera 1 seitlich angeordnet. Diese beiden Kameras 1 werden zur Korrelation geometrischer Merkmale eingesetzt. Die Pflanzenmerkmale von Nutzpflanzen und Beikräutern sind in vielen Fällen durch ihre Geometrie (Sicht von oben und seitlich) unterscheidbar, welches hierdurch den Einsatz von zwei Kameras 1 ausgenutzt wird. Die beiden Kamerasignale werden durch das Microcontrollersystem 5 bzw. den PC ausgewertet und durch diese schnelle Analyse der Daten werden die Pflanzen 3 differenziert

Der Einsatz eines Microconrollers 5 erlaubt die Integration weiterer Sensoren in Form und Anordnung einer Multisensorkonzeption. Dieses ist für den speziellen Fall interessant, wenn die Differenzierung von Nutzpflanzen und Beikräutern durch zwei oder mehrere Kameras 1 nicht immer möglich ist.

Diese Vorrichtung zur Erkennung von Pflanzen läßt sich in vielfältiger Weise in der Landwirtschaft einsetzen. Beispielsweise ist der Einsatz geeignet, um Nutzpflanzen 3 von Beikräutern (Unkraut) zu unterscheiden, um somit eine gezielte Anwendung von Pflanzenschutzmitteln zu ermöglichen. Auch kann diese Vorrichtung eingesetzt werden, um beim mechanischen Hacken die Beikräuter abzuschneiden und die Nutzpflanzen zu erhalten.

## Patentansprüche

1. Vorrichtung zur Erkennung von Pflanzen und/oder Mustern in landwirtschaftlichen Anwendungen mittels elektronisch auswertenden Sensorelementen oder - Systemen, **dadurch gekennzeichnet, daß** zumindest eine digitale CMOS-XY Kamera (1) zur Pflanzen- und/oder Mustererkennung vorgesehen ist, daß die Kamera eine freie Adressierbarkeit und einen wahlfreien Zugriff einzelner Bildpixel aufweist, daß die Auflösung des aufzunehmenden Bildes per Software festlegbar und nicht durch die Kamera (1) fixiert ist, dass softwaremäßig nur eine begrenzte Anzahl Pixel zur Auswertung verwendet wird.

2. Vorrichtung nach Anspruch 1, **dadurch gekennzeichnet, daß** die Auflösung zwischen 24x24 und 48x48, vorzugsweise 32x32 Pixel beträgt.

3. Vorrichtung nach einem oder mehreren der vorstehenden Ansprüche, **dadurch gekennzeichnet, daß** den Sensorelementen (1) eine Beleuchtungsquelle (2) im nahen Infrarotbereich zugeordnet ist.

4. Vorrichtung nach einem oder mehreren der vorstehenden Ansprüche, **dadurch gekennzeichnet, daß** den Sensorelementen (1) optische Filter und eine Beleuchtungsquelle (2) im nahen Infrarotbereich zugeordnet ist.

5. Vorrichtung nach einem oder mehreren der vorstehenden Ansprüche, **dadurch gekennzeichnet, daß** die Beleuchtungsquelle (2) seitlich der zu erkennenden Pflanzen (3) angeordnet ist.

6. Vorrichtung nach einem oder mehreren der vorstehenden Ansprüche, **dadurch gekennzeichnet, daß** die Sensorelemente (1) an ein Microcontrollersystem (5) oder einen PC zur schnellen Weiterverarbeitung der von den Sensorelementen (1) aufgenommenen Signale aufweist.

7. Vorrichtung nach einem oder mehreren der vorstehenden Ansprüche, **dadurch gekennzeichnet, daß** die Vorrichtung eine spezielle Software, die schnelle Algorithmen enthält, zur Analyse der Signale verwendet.

8. Vorrichtung nach einem oder mehreren der vorstehenden Ansprüche, **dadurch gekennzeichnet, daß** zwei Kameras (1) verwendet werden, daß mittels der mehreren Kameras (1) eine Korrelation geometrischer Merkmale erfolgt.

9. Vorrichtung nach einem oder mehreren der vorstehenden Ansprüche, **dadurch gekennzeichnet, daß** zusätzlich zu der Kamera (1) weitere Sensoren in Art einer Multisensorkonzeption vorgesehen sind.

## Claims

1. Apparatus for detecting plants and/or patterns in agricultural applications by means of electronically evaluating sensor elements or systems, **characterised in that** at least one digital CMOS-XY camera (1) is provided for the detection of plants and/or patterns, **in that** the camera has a free addressability and a random access to individual image pixels, **in that** the resolution of the image to be received is determinable by software and is not fixed by the camera (1), and **in that** only a limited number of pixels is used for evaluation by software.

2. Apparatus according to claim 1, **characterised in that** the resolution is between 24x24 and 48x48, preferably 32x32 pixels.

3. Apparatus according to one or more of the preceding claims, **characterised in that** the sensor elements (1) have associated therewith a source of illumination (2) in the near infra-red range.

4. Apparatus according to one or more of the preceding claims, **characterised in that** the sensor elements (1) have associated therewith optical filters and a source of illumination (2) in the near infra-red range.

5. Apparatus according to one or more of the preceding claims, **characterised in that** the source of illumination (2) is disposed laterally of the plants (3) to be detected.

6. Apparatus according to one or more of the preceding claims, **characterised in that** the sensor elements (1) have a microcontroller system (5) or a PC for the rapid subsequent processing of the signals received by the sensor elements (1).

7. Apparatus according to one or more of the preceding claims, **characterised in that** the apparatus uses special software, which includes rapid algorithms; to analyse the signals.

8. Apparatus according to one or more of the preceding claims, **characterised in that** two cameras (1) are used, and **in that** a correlation between geometric features is effected by means of the plurality of cameras (1).

9. Apparatus according to one or more of the preceding claims, **characterised in that**, in addition to the camera (1), additional sensors are provided in the form of a multisensor concept.

## Revendications

1. Dispositif de reconnaissance de plantes et/ou de modèles dans des applications agricoles à l'aide d'éléments ou de systèmes de capteur à exploitation électronique,
**caractérisé en ce qu'**
au moins une caméra CMOS-XY (1) pour la reconnaissance de plantes et/ou de modèles, présente un adressage libre et un accès non sélectif des différents pixels des images,
la résolution de l'image à prendre se fait par programme et n'est pas fixée par la caméra (1), de sorte que selon le programme seul un nombre limité de pixels est utilisé dans l'application.

2. Dispositif selon la revendication 1,
**caractérisé en ce que**
la résolution est de 24 x 24 et 48 x 48 et notamment de 32 x 32 pixels.

3. Dispositif selon l'une ou plusieurs des revendications précédentes.
**caractérisés en ce qu'**
une source d'éclairage (2) travaillant dans le proche infrarouge est associée aux éléments de capteur (1).

4. Dispositif selon l'une ou plusieurs des revendications précédentes,
**caractérisé en ce que**
des filtres optiques et une source d'éclairage (2) sont associés dans la plage du proche infrarouge aux éléments de capteur (1).

5. Dispositif selon l'une ou plusieurs des revendications précédentes,
**caractérisé en ce que** ,
la source d'éclairage (2) est prévue à côté des plantes à reconnaitre (3).

6. Dispositif selon l'une ou plusieurs des revendications précédentes,
**caractérisé en ce que**
les éléments de capteur (1) sont reliés à un système à micro-contrôleur (5) ou un PC pour le traitement rapide des signaux reçus par les éléments de capteur (1).

7. Dispositif selon l'une quelconque des revendications précédentes,
**caractérisé en ce que**
le dispositif utilise un programme spécial contenant des algorithmes rapides pour l'analyse des signaux.

8. Dispositif selon l'une ou plusieurs des revendications précédentes,
**caractérisé par**
l'utilisation de deux caméras (1), plusieurs caméras (1) permettant une corrélation des caractéristiques géométriques.

9. Dispositif selon l'une ou plusieurs des revendications précédentes,
**caractérisé en ce qu'**
en plus de la caméra (1) on a d'autres capteurs suivant une conception multicapteurs.
